# EUROPEAN PATENT APPLICATION

(11) **EP 2 503 434 A1**
(43) Date of publication of application: **26.09.2012**
(21) Application number: 11159285.3
(22) Date of filing: 22.03.2011
(51) Int. Cl.: G06F 3/042

(54) **Combined optical navigation and button**

(71) Applicant: Research In Motion Limited, Waterloo, ON N2L 3W8 (CA)
(72) Inventor: Bos Jeffrey Charles, Waterloo Ontario N2L 5R9 (CA)
(74) Representative: Roberts, Gwilym Vaughan

(57) **Abstract**

An optical touchpad is responsive to application of a pressure, and a sliding movement executed within a preset interval after the predetermined pressure is applied. A user applies the concurrent predetermined pressure and sliding movement as a combined gesture. A controller receives information pertaining to both the pressure and the sliding movement.

## Description

### FIELD OF THE DISCLOSURE

The present disclosure generally relates to sensing gestural movements for controlling electronic equipment and more particularly to optical navigation devices therefore.

### BACKGROUND

Computing devices may include a finger operated input device, or touchpad, for sensing movement. Certain capacitive sensing touchpads enable input in the form of gestures, including tapping and or movement of fingers upon the touchpad surface, in a particular manner. These gestures are interpreted by the computing device in order to carry out a perceived intention of the user.

In a drag and drop operation using such devices, a virtual object is targeted by hovering a visible indicator over the item, and pressing a button or tapping the touchpad. A finger is moved upon the touchpad to cause a corresponding movement of the object. When the object is at a desired location, a button is pressed or the touchpad is tapped, to end the drag and drop operation. Therefore, the effectiveness of touchpad, especially optical touchpads, for sensing movement is limited to only a direction horizontal to the touchpad.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 illustrates a mobile computing device, wherein a user's digit is positioned over an optical control device;

FIG. 2 illustrates the device of FIG. 1, wherein the user's digit depresses a surface of the optical control device;

FIG. 3 illustrates the device of FIG. 2, wherein the user's digit begins to move across a surface of the optical control device, while maintaining the surface in a depressed state, resulting in a corresponding movement of virtual objects upon the display;

FIG. 4 illustrates the device of FIG. 3, in which further movement of the user's digit causes additional change to the displayed contents;

FIG. 5 is a schematic illustration of components of an optical navigation device, wherein a user's finger is about to press a surface of the optical navigation device;

FIG. 6 illustrates the device of FIG. 5, wherein a user's finger has depressed the surface, and wherein a relative distance between components of the device is maintained, when the surface is depressed;

FIG. 7 illustrates the device of FIG. 5, wherein a user's finger has depressed the surface, and wherein a relative distance between focusing subcomponents of the device and the surface of the device is changed when the surface is depressed;

FIG. 8 illustrates the device of FIG. 5, wherein a user's finger has depressed the surface, and wherein a relative distance between light emitting and receiving components of the device and the surface of the device is changed when the surface is depressed;

FIG. 9 illustrates the device of FIG. 5;

FIG. 10 illustrates the device of FIG. 9, integrated into an optical navigation device;

FIG. 11 illustrates the device of FIG 10, integrated into a mobile device;

FIG. 12 illustrates the device of FIG. 10, integrated into a vehicle dashboard;

FIG. 13 is a flow diagram of a method in accordance with an embodiment; and

FIG. 14 is a block diagram illustrating a detailed view of an information processing system according to one embodiment.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the present subject matter in virtually any appropriately detailed structure and function. Further, the terms and phrases used herein are not intended to be limiting, but rather, to provide an understandable description of the concepts.

The terms "a" or "an", as used herein, are defined as one or more than one. The term plurality, as used herein, is defined as two or more than two. The term another, as used herein, is defined as at least a second or more, The terms "including" and "having," as used herein, are defined as comprising (i.e., open language). The term "coupled," as used herein, is defined as "connected," although not necessarily directly, and not necessarily mechanically.

Overview

A computing device for processing a gesture from a computing device user comprises a processor operative to process gesture information; an optical touchpad with a touchable surface, the touchpad communicatively coupled to a controller and operative to detect a movement traversing at least one direction substantially within a plane of the touchpad; a sensor communicatively coupled to the controller for sensing pressure in a direction substantially normal to a plane of the touchpad surface; and means cooperative with the means for sensing movement and the means for sensing pressure, for communicating a concurrent sensed traversing movement and sensed pressure, to the controller; whereby the computing device is operative to process a concurrent press and movement gesture of the user as a combined gesture communicating an intent of the user which is distinct from an intent of the user corresponding to either a press gesture or a movement gesture, individually.

In various embodiments thereof, the optical touchpad includes means for sensing movement across the touchable surface, including a light emitter operative to emit light in a direction of the touchpad, and a sensor operative to sense changes in light reflected from the touchpad; the emitter is an LED; the concurrent sensed movement and sensed predetermined increase in pressure are processed as a combined gesture only when the movement is sensed within a predetermined time after the predetermined increase in pressure is sensed; the means for communicating includes either a wired or wireless connection to a circuit containing the processor; the optical touchpad is in a physically separate housing than the processor; the optical touchpad includes one or more lenses; at least one of the one or more lenses remains at a fixed distance from the touchable surface when the predetermined pressure is applied to the touchpad surface; or at least one of the one or more lenses moves to a changed distance from the touchable surface when the predetermined pressure is applied to the touchpad surface.

In another embodiment, a method of processing a gesture from a computing device user, comprises sensing a predetermined increase in pressure upon a surface of an optical touchpad; sensing movement upon the surface, the movement occurring concurrently with the sensed increase in pressure and beginning within a predetermined time period after the increase in pressure is sensed; processing the concurrent sensed pressure and the sensed movement as a combined gesture of the user, communicating an intent of the user which is distinct from an intent of the user corresponding to either a press gesture or a movement gesture, individually.

In various embodiments thereof, the concurrent sensed pressure and the sensed movement are sensed when created by a single digit of the hand of the user; the single digit may be the thumb of the user; the concurrent sensed pressure and the sensed movement are sensed when created by an effector selected from the group consisting of: a single digit of a hand of the user, a portion of the user's body, a foot of the user, the head of the user, the mouth of the user, the lips of the user, a position of a limb of the user, an object held by the user, an object moved by the user, an object caused to be moved by the user; the sensed predetermined increase in pressure is sensed when a digit of a hand of the user is pressed upon a first location of the surface of the optical touchpad, and the sensed movement is sensed when the digit of a hand of the user moves from the first location to a second location upon the surface of the optical touchpad, at a distance from the first location; and the first location is proximate a peripheral edge of the touchpad surface, and the second location is farther from the peripheral edge of the touchpad surface than the first location.

Embodiments

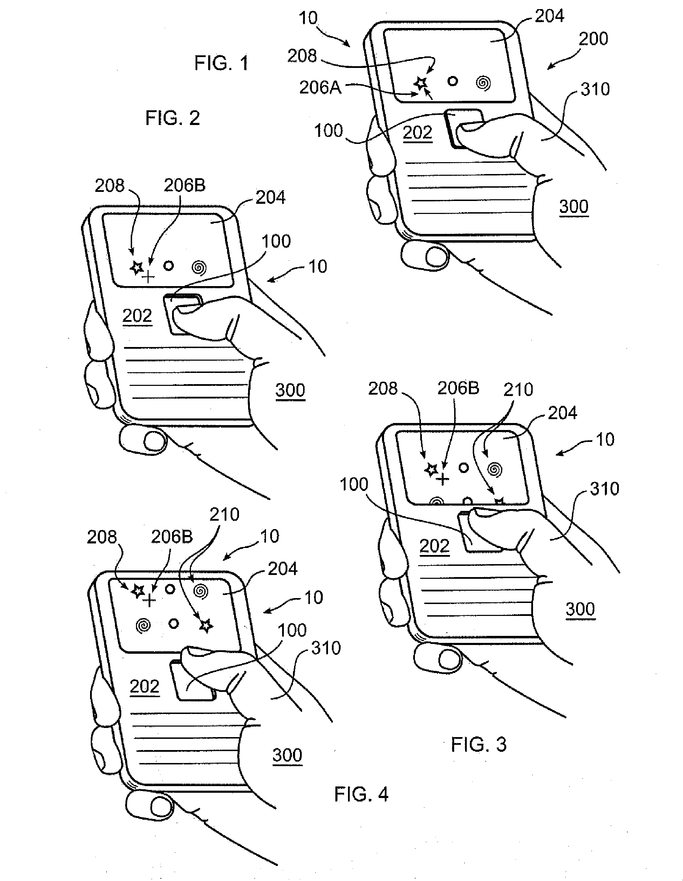

With reference to FIG. 1, a navigation device 10 includes a touchable or touch surface 100, operable to be pressed to indicate a specific gesture of a user 300 to a computing device 200. In the illustrations, a user's finger, thumb, or digit 310 is shown, however for optical navigation touch surfaces, in particular, any object operative to change reflected light within the optical navigation device may advantageously be used to indicate a gesture.

In FIGS. 1-4, a mobile, or handheld computing device 200 is shown. It should be understood, however, that a navigation device 10 may be used in conjunction with any computing device, either integrated into a housing of the device, or physically separated or separable.

Examples of computing device 200 include cell, radio, or other wireless phone; wired phones; music players; game devices; handheld computers; ebook readers; portable computers; laptop computers; desktop computers; computer servers; computing peripherals, including printers, monitors, keyboard, plug-in keyboard complement devices, and other input or output devices; embedded devices, including set top devices, industrial controllers, scientific apparatus, and appliances, such as a kitchen appliance; interface for controlling movement of a vehicle, vehicle interfaces for vehicle control or control of vehicle accessories, such as navigation or media devices, such as an audio or video device, where the vehicle type includes, for example, wheeled transportation vehicles, wheelchairs, boats, flying vehicles, and military vehicles; interface for levers, portals, doors, access panels, or other architectural structure; or any other device which requires or advantageously utilizes human input in the form of gestures.

Navigation device 10 may communicate with computing device 200 by any known means, including use of a wire, or through a signal transmitted by wave, or pulsed energy.

Gestures as used herein include any movement of any part of the human or animal body, to indicate a desired message or signal to a computing device. Accordingly, while a digit of a human hand is illustrated in FIGS. I-8, it should be understood that a scale of the device may be substantially different, and that gestures may be indicated by any portion of the body, including the entire hand of the user, or a portion of the hand including the palm, one or more fingers, the thumb, or a combination of the thumb and one or more fingers, or the use of a foot or feet, a body position, a position of the head, mouth, or lips, or the position and movement of a limb, for example. Additionally, a gesture may be indicated by an object held, controlled, or directed by a body. Accordingly, navigation device 10 may be sized to be stood or leaned upon, or stood in front of, for example to change a pattern of light directed upon a touch or touch surface.

As used herein, the term "press" indicates any touching af touch surface 100 of navigation device 10 with an amount of pressure in a direction substantially normal to the touch surface and sufficient to differentiate a gesture of moving an object in contact with and across touch surface 100 in a given substantially horizontal plane. The term "press" is contrasted with a gesture of "pushing," for example in a direction generally or substantially not parallel to a surface of touch surface 100. Accordingly, a press does not require a corresponding movement of touch surface 100, but merely the detection by navigation device 10 of such general or substantially non-parallel pressure, that may be differentiated or distinguished from a generally coplanar or parallel movement across a surface of touch surface 100.

In FIG. 1, digit 310 is positioned over touch surface 100. In FIG. 2, digit 310 has applied a pressure to touch surface 100, which, in this embodiment, has depressed touch surface 100 to a position below a frame surface 202 of computing device 200. It should be understood that a significant extent of depression is illustrated in FIGS. 2-4 for clarity; however, as described above, touch surface 100 may not change a position at all, or may be depressed only slightly.

Alternatively, touch surface 100 may have a resting, un-pressed, or starting position which is higher than frame surface 202, and when pressed, may have a pressed or finishing position which remains higher than frame surface 202. Moreover, a surrounding peripheral frame, or bezel (not shown) may surround touch surface 100, and touch surface may have a starting position which is higher than the bezel, and advantageously a finishing position which remains higher than the bezel. As such, the bezel or frame surface 202 will not interfere with a sliding movement of a digit of a user.

The aforedescribed press of touch surface 100 is indicated or signaled to other portions of computing device 200 as a "press signal", in any known manner, including, for example, the use of a pressure transducer 500, for example a strain gauge; or movement of a mechanical switch; or a resilient member, such as a rubber dome, spring, or flexible member, associated with a switch or contacts; or an optically activated sensor or switch; such signaling means associated with touch surface 100. A press signal is advantageously indicated by a predetermined amount of pressure, or a predetermined increase in pressure, applied to touch surface 100, as compared to a resting or non-pressed state of touchpad surface 100.

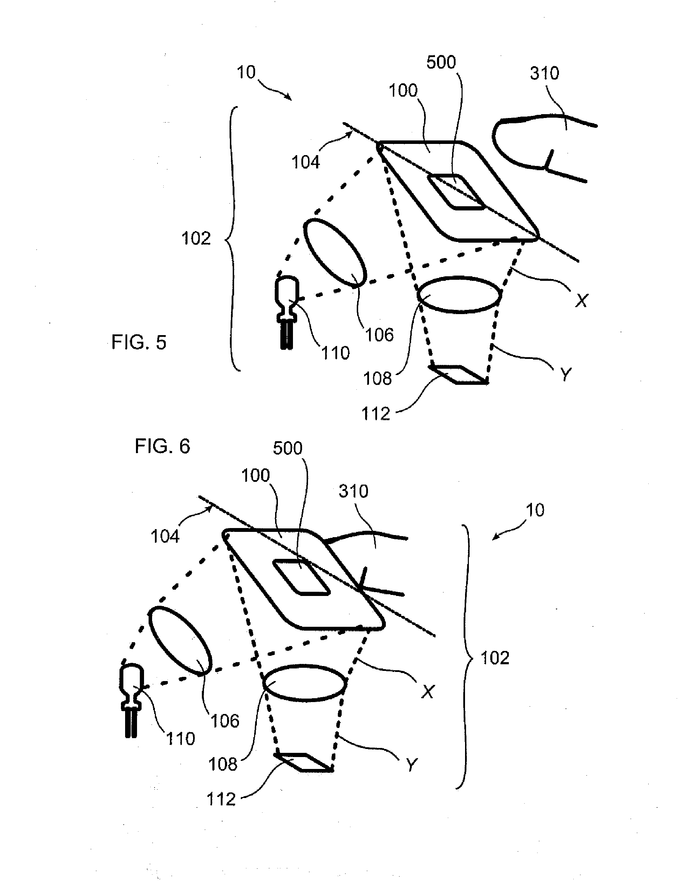

In one embodiment, a change in pressure is detected as a change in focal length of one or more components associated with touch surface 100, as illustrated in FIGS. 5-9.

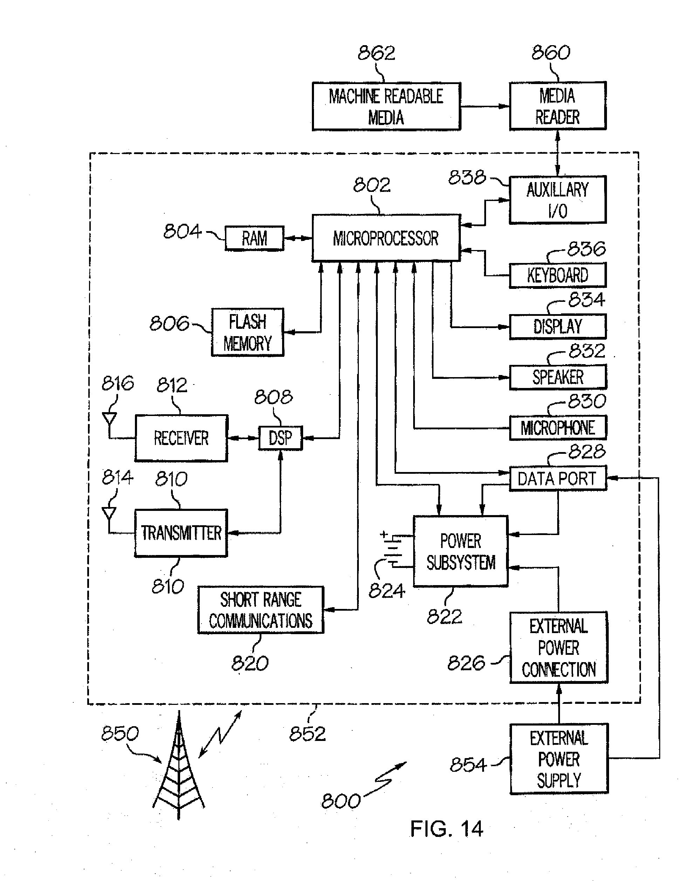

Once the press signal is communicated to the computing device 200, for example, to the controller, processor or central processing unit (CPU) of the computing device, for example controller or processor 802 of FIG. 14, in one embodiment, the CPU waits a predetermined time to determine if an additional gesture follows, in order to determine whether the press gesture is to be interpreted in combination with a subsequent gesture. If no subsequent gesture occurs during the predetermined time interval, steps are carried out by the CPU corresponding to an individual press gesture, alone. If a subsequent gesture takes place within the predetermined time interval, the CPU carries out steps corresponding to the combined gestures.

Further, a press gesture is combined with a subsequent gesture, such as a sliding or dragging gesture, to produce a signal or instruction to the computing device 200 which is different than a signal or instruction given by either the press signal, or subsequent gesture, alone.

Yet further, a subsequent gesture may be any gesture possible while the touch surface -100 is maintained in a pressed state. In the example shown in FIGS. 1-4, touch surface 100 is small relative to the hand of user 300, and thus it is advantageous to combine a press signal and a subsequent signal with a single digit 310; in particular, the subsequent signal is a sliding of digit 310 across a length of the surface of touch surface 100. Where touch surface 100 is larger, it may be possible to slide other digits, for example two or more digits, across touch surface 100, Similarly, a unique signal may be sent by identifying a press from more than one digit upon touch surface 100. This unique, multi-press signal, may then be combined with a subsequent gesture, to produce a further unique signal. A subsequent signal may also be uniquely identified by a divergence, convergence, and/or rotation of a plurality of sliding digits upon touch surface 100.

As such, a controller (802, 1002) concurrently detects a subsequent gesture which traverses at least one direction substantially within a given plane, and detects a press gesture in a direction substantially normal to the plane.

In FIGS. 1 and 2, digit 310 is positioned at a peripheral area of touch surface 100. In FIG. 3, while maintaining touch surface 100 pressed, digit 310 has been slid a distance across a surface of touch surface 100. To increase a duration of a subsequent sliding signal, it is advantageous to begin a press signal at a periphery, or bordering extent, of touch surface 100, whereby sliding may occur over a greater length of a surface of touch surface 100, as illustrated in FIGS. 1-4.

Further, a digit movement, or movement gesture, may be continuous, in any direction, and in more than one direction, until a press is released, producing corresponding instructions to computing device 200.

FIGS. 1-4 illustrate a change in a human visible output, or display 204, wherein said change correlates with the illustrated press and sliding gestures. More particularly, a press may be carried out when a cursor indicated upon a display is positioned next to a particular element on the display. In the example of FIGS. 1-4, an arrow cursor 206A is positioned in relation to a particular object 208. It should be noted that cursor 206A may have any form, including highlighting of a displayed element. Moreover, cursor 206A may change form to indicate or acknowledge the start or progress of a gesture or combined gesture, as indicated by cursor 206B.

Alternatively, a single press gesture or other gesture may be conducted to place a displayed object in "focus", whereby it is known by a CPU of computing device 200, or a User Interface software executing within computing device 200, that a displayed object is to be affected by a subsequent gesture. The subsequent gesture may then be a press and slide.

Gestural processor instructions within computing device 200 are provided operative to interpret a press signal and a drag or slide signal that are both executed within a predetermined time interval, correlating to a combined signal. Functional processor instructions interpret the combined signal with respect to a location of cursor 206A at a time the gesture is initiated. The functional processor instructions may correlate to any activity that may be carried out by a computing device, as outlined above. In the example of FIGS. 1-4, the combined gesture is a press, and a slide while the press is maintained. The exemplary corresponding functional processor instructions are to slide displayed content in the direction of movement of the digit 310. In one alternative, the displayed content is "grabbed", whereby the content moves in a manner which corresponds to a gestural movement on touch surface 100, and may be moved continuously until a press is discontinued.

With further reference to FIGS. 1-4, in this embodiment, functional processor instructions associated with a combined press signal and slide signal are operative to move selected portions or all of displayed content in the direction of the sliding digit. Displayed content is schematically indicated by two rows of characters comprising a star, circle, and spiral; however, it should be understood that the displayed content may be any displayed information, including, for example, but not limited to, rows of icons corresponding to programs available, a position of a vehicle, a location on a map, or a series of files or folders. As may be seen in FIGS. 2-4, as digit 310 slides across a surface of touch surface 100, object 208, and possibly other visible objects 210, move a corresponding amount. Alternatively, digit 310 or other gesture conveying object may be rolled, flexed, reshaped, or otherwise repositioned, with or without a corresponding sliding movement, to produce a sensed directional movement upon touch surface 100.

During the slide gesture, selected items or other displayed content may be moved upon the display. For example, additional content may be moved into a visible portion of display 204. More particularly, additional and/or alternate icons or text may be moved onto display 204. In another example, selected content may be moved over a target area of display 204, and "dropped", or associated with the target area, when the initiated press gesture is discontinued. Example include "drag" and "dropping" a selected item onto a "trash" icon, or moving a selected item from a first storage position to a second storage position. Another example is commencing an action with a drag and dropped item, for example starting a program and loading the selected item for use by the application, or applying attributes to the selected item. The foregoing are exemplary actions or uses for gestures; however it should be understood that other known actions, or actions which may be hereafter conceived, may advantageously be carried out using methods or devices.

With reference to FIG. 5-8, navigation device 10 includes a touch surface 100 and optical means 102 for sensing a gestural movement upon touch surface 100. Optical means are any known method for sensing a movement upon a touch surface, including the means herein disclosed, or hereafter invented, for sensing movement upon a touchpad using light, and include impinging a surface of the touchpad with light, and observing reflected light with a sensor. In FIG. 5, digit 310 is positioned prior to pressing touch surface 100. Line 104 indicates a resting, or not pressed position, of a surface of touch surface 100, although it should be understood a position of touch surface 100 may not be changed in some embodiments, when touch surface 100 is pressed. In FIGS. 5-8, however, a changed position of touch surface 100 relative to line 104 indicates a pressed condition of touch surface 100. In FIG. 5, touch surface 100 is not pressed. References "X" and "Y" represent relative distances between one or more lenses and emitter/receiver, for example between emitter lens 106, and receiver lens 108, and light emitter 110, for example an LED, and a light receiver 112, for example an optical or light sensor, respectively. In FIG. 6, it may be seen that optical means 102 collectively move together with touch surface 100, whereby a focal length of the relative components is unaffected by a movement of touch surface 100. It should be noted that while two lenses are illustrated, a single lens 106 or 108 may be sufficient, or a single lens serving both the emitter and receiver, or no lens may be needed, in some embodiments.

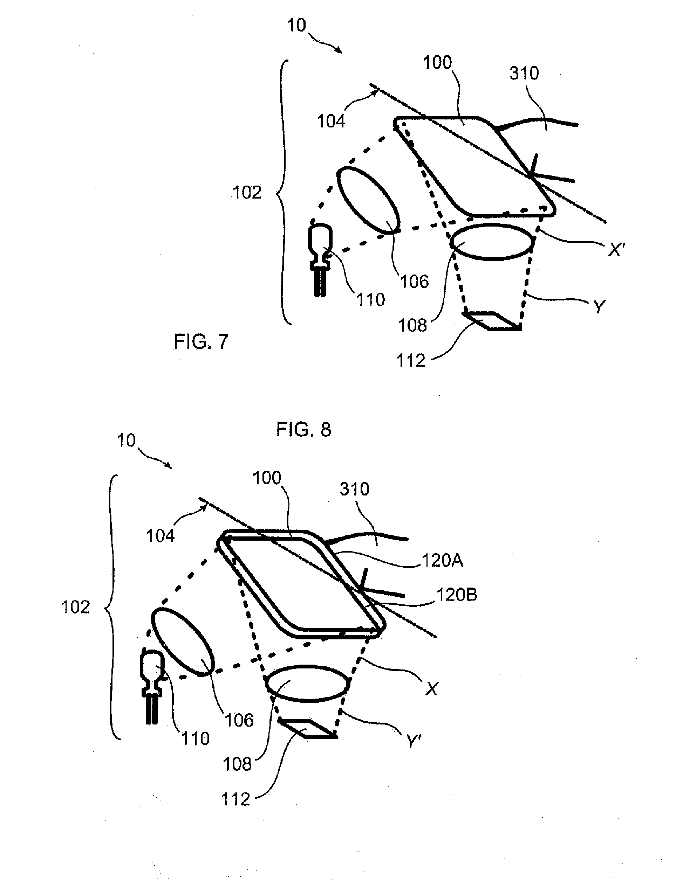

In FIG. 7, it may be seen that a position of light emitter 110 and light receiver 112 remains fixed during a press, with respect to lenses 106, 108, respectively, and a distance between lenses 106, 108 is changed with respect to a position of touch surface 100, as indicated by reference "X"'. In FIG. 8, it is a position of emitter 110 and receiver 112 that is changed, as indicated by reference "Y"'. Of course all other permutations of moved components may occur.

Accordingly, a focal length of navigation device 10 may be changed for a touch surface 100 with optical means 102, for example. In one embodiment, a change in focal length is not sufficient to require any compensation. In another embodiment, a change in focal length produces a changed sensed result at receiver 112. Said changed sensed result may be compensated by changing data values received from receiver 112, for example using processor instructions. Alternatively, a position of emitter 110, receiver 112, or lens 106 or 108 may be adjusted during a press, using mechanical means.

In another embodiment, shown in FIG. 8, touch surface 100 may be provided with one or more layers 120A, 120B, each of which reflects light at a different focal length than the other, corresponding to a pressed and not pressed position of touch surface 100.

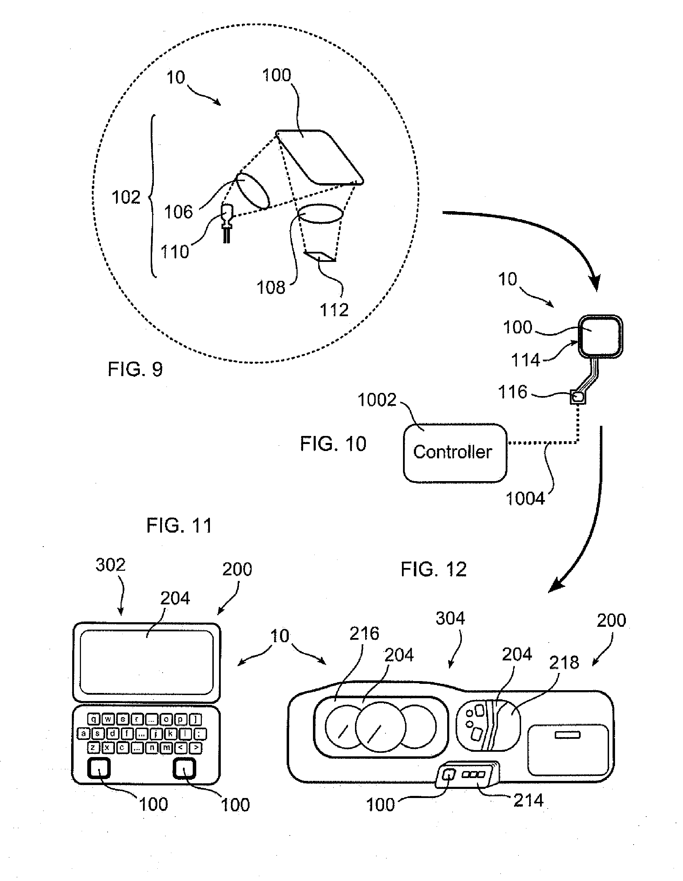

FIG. 9 illustrates a navigation device 10, including optical means 102, and particularly emitter 110, emitter lens 106, touch surface 100, receiver lens 108, and receiver 112. FIG. 10 illustrates the components of FIG. 9, packaged within a single physical package, unit, or housing 114, and including a connector 116 for connecting navigation device 10 in electronic communication with computing device 200. Within housing 114, or connected via connector 116, are ancillary electronics associated with components of an optical navigation device, which may include any or all of a digital signal processor (DSP), a driver, an analog to digital converter (ADC), and/or a microcontroller. In FIG. 10, a controller 1002 is shown, connected to connector 116 by an electrical pathway 1004, A controller 1002 may be housed together with housing 114, or physically separated in a separate housing. Housing 114 is constructed to be sufficiently rugged for the application intended. The housing can be a single physical unit.

In FIG. 11, a navigation device 10 in the form of a mobile device is illustrated, incorporating two touch surfaces 100. A single touch surface 100, or a plurality of touch surfaces 100 as described herein, are contemplated within the spirit and scope of an embodiment.

FIG. 12 illustrates a navigation device 10 in the form of a vehicle dashboard, including a touch surface 100 positioned within a shelf 214 upon which a driver or passenger may stabilize a hand. Touch surface 100 may be used to communicate gestures for configuring or signaling an instrument panel 216, for example in the form of an LCD, or a navigation device 218.

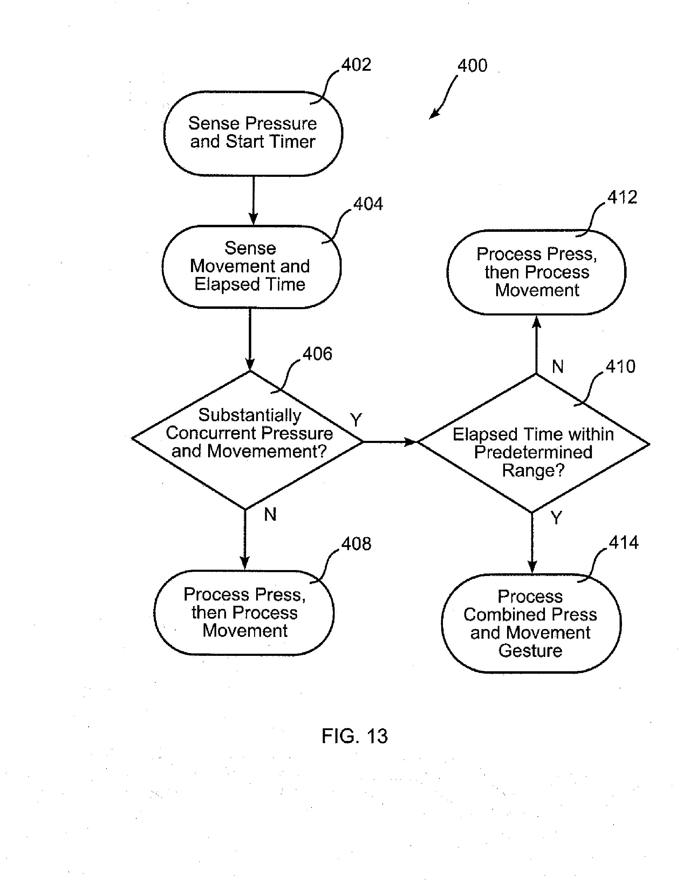

With reference to FIG. 13, a method of processing a gesture from a computing device user may be seen in diagram 400. A controller is communicatively coupled to an optical touchpad and a sensor, and in step 402, a pressure is sensed upon a surface 100 of the optical touchpad, and the controller causes a timer to start. In step 404, a movement is sensed along surface 100, and an elapsed time of the timer is noted. In step 406, the controller determines if the pressure and movement are substantially concurrent; if not, in step 408, the press and the movement are processed separately. If the pressure and movement are substantially concurrent, in step 410, it is determined if the elapsed time is within a predetermined time period. In step 412, if the movement was not begun within the predetermined time period, the press and the movement are processed separately. If the movement was begun within the predetermined time period, in step 414, the press and the movement are processed as a combined pressure and movement gesture. Substantially concurrent is defined as a period of time that may elapse between a press and a move gesture, whereby the gestures will be deemed concurrent by device 200. For most individuals, this is typically less than 2 seconds, and may be less than 1 second. For individuals with limited movement or reaction abilities, it may be advantageous to set an interval defined as substantially concurrent to be greater than 2 seconds. Thus substantially concurrent is further defined as a period of time that is significantly shorter than a period of time intended to distinguish between separate press and move gestures. A substantially concurrent period of time may be defined by software executing upon processor 802, and may advantageously be adjustable by a user.

FIG. 14 is a block diagram of an electronic device and associated components 800 in which the systems and methods disclosed herein may be implemented. In this example, an electronic device 852 is a wireless two-way communication device with voice and data communication capabilities. Such electronic devices communicate with a wireless voice or data network 850 using a suitable wireless communications protocol. Wireless voice communications are performed using either an analog or digital wireless communication channel. Data communications allow the electronic device 852 to communicate with other computer systems via the Internet. Examples of electronic devices that are able to incorporate the above described systems and methods include, for example, a data messaging device, a two-way pager, a cellular telephone with data messaging capabilities, a wireless Internet appliance or a data communication device that may or may not include telephony capabilities.

The illustrated electronic device 852 is an example electronic device that includes two-way wireless communications functions. Such electronic devices incorporate communication subsystem elements such as a wireless transmitter 810, a wireless receiver 812, and associated components such as one or more antenna elements 814 and 816. A digital signal processor (DSP) 808 performs processing to extract data from received wireless signals and to generate signals to be transmitted. The particular design of the communication subsystem is dependent upon the communication network and associated wireless communications protocols with which the device is intended to operate.

The electronic device 852 includes one or more microprocessors 802, or as shown in FIG. 10, controller 1002, that control some or all of the overall operation of the electronic device 852. The microprocessor 802 interacts with the above described communications subsystem elements and also interacts or is responsive to with other device subsystems such as flash memory 806, random access memory (RAM) 804, auxiliary input/output (I/O) device 838, data port 828, display 834, keyboard 836, speaker 832, microphone 830, a short-range communications subsystem 820, a power subsystem 822, and any other device subsystems.

A battery 824 is connected to a power subsystem 822 to provide power to the circuits of the electronic device 852. The power subsystem 822 includes power distribution circuitry for providing power to the electronic device 852 and also contains battery charging circuitry to manage recharging the battery 824. The power subsystem 822 includes a battery monitoring circuit that is operable to provide a status of one or more battery status indicators, such as remaining capacity, temperature, voltage, electrical current consumption, and the like, to various components of the electronic device 852.

The data port 828 of one example is a receptacle connector 104 or a connector that to which an electrical and optical data communications circuit connector 800 engages and mates, as described above. The data port 828 is able to support data communications between the electronic device 852 and other devices through various modes of data communications, such as high speed data transfers over an optical communications circuits or over electrical data communications circuits such as a USB connection incorporated into the data port 828 of some examples. Data port 828 is able to support communications with, for example, an external computer or other device.

Data communication through data port 828 enables a user to set preferences through the external device or through a software application and extends the capabilities of the device--by enabling information or software exchange through direct connections between the electronic device 852 and external data sources rather then via a wireless data communication network. In addition to data communication, the data port 828 provides power to the power subsystem 822 to charge the battery 824 or to supply power to the electronic circuits, such as microprocessor 802, of the electronic device 852.

Operating system software used by the microprocessor 802 is stored in flash memory 806. Further examples are able to use a battery backed-up RAM or other non-volatile storage data elements to store operating systems, other executable programs, or both. The operating system software, device application software, or parts thereof, are able to be temporarily loaded into volatile data storage such as RAM 804. Data received via wireless communication signals or through wired communications are also able to be stored to RAM 804.

The microprocessor 802, in addition to its operating system functions, is able to execute software applications on the electronic device 852. A predetermined set of applications that control basic device operations, including at least data and voice communication applications, is able to be installed on the electronic device 852 during manufacture. Examples of applications that are able to be loaded onto the device may be a personal information manager (PIM) application with the ability to organize and manage data items relating to the device user, such as, but not limited to, e-mail, calendar events, voice mails, appointments, and task items.

Further applications may also be loaded onto the electronic device 852 through, for example, the wireless network 850, an auxiliary I/O device 838, Data port 828, short-range communications subsystem 820, or any combination of these interfaces. Such applications are then able to be installed by a user in the RAM 804 or a non-volatile store for execution by the microprocessor 802.

In a data communication mode, a received signal such as a text message or web page download is processed by the communication subsystem, including wireless receiver 812 and wireless transmitter 810, and communicated data is provided the microprocessor 802, which is able to further process the received data for output to the display 834, or alternatively, to an auxiliary I/O device 838 or the Data port 828. A user of the electronic device 852 may also compose data items, such as e-mail messages, using the keyboard 836, which is able to include a complete alphanumeric keyboard or a telephone-type keypad, in conjunction with the display 834 and possibly an auxiliary I/O device 838. Such composed items are then able to be transmitted over a communication network through the communication subsystem.

For voice communications, overall operation of the electronic device 852 is substantially similar, except that received signals are generally provided to a speaker 832 and signals for transmission are generally produced by a microphone 830. Alternative voice or audio I/O subsystems, such as a voice message recording subsystem, may also be implemented on the electronic device 852. Although voice or audio signal output is generally accomplished primarily through the speaker 832, the display 834 may also be used to provide an indication of the identity of a calling party, the duration of a voice call, or other voice call related information, for example.

Depending on conditions or statuses of the electronic device 852, one or more particular functions associated with a subsystem circuit may be disabled, or an entire subsystem circuit may be disabled. For example, if the battery temperature is low, then voice functions may be disabled, but data communications, such as e-mail, may still be enabled over the communication subsystem.

A short-range communications subsystem 820 provides for data communication between the electronic device 852 and different systems or devices, which need not necessarily be similar devices. For example, the short-range communications subsystem 820 includes an infrared device and associated circuits and components or a Radio Frequency based communication module such as one supporting Bluetooth^{®} communications, to provide for communication with similarly-enabled systems and devices, including the data file transfer communications described above.

A media reader 860 is able to be connected to an auxiliary I/O device 838 to allow, for example, loading computer readable program code of a computer program product into the electronic device 852 for storage into flash memory 806. One example of a media reader 860 is an optical drive such as a CD/DVD drive, which may be used to store data to and read data from a computer readable medium or storage product such as computer readable storage media 862. Examples of suitable computer readable storage media include optical storage media such as a CD or DVD, magnetic media, or any other suitable data storage device. Media reader 860 is alternatively able to be connected to the electronic device through the Data port 828 or computer readable program code is alternatively able to be provided to the electronic device 852 through the wireless network 850.

Information Processing System

The present subject matter can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable. A typical combination of hardware and software could be a general purpose computer system with a computer program that, when being loaded and executed, controls the computer system such that it carries out the methods described herein.

The present subject matter can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits. Furthermore, the computer readable medium may comprise computer readable information in a transitory state medium such as a network link and/or a network interface, including a wired network or a wireless network, that allow a computer to read such computer readable information.

Non-Limiting Examples

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, madifications,and embodiments within the scope of the present disclosure.

## Claims

1. An input device **characterized by**:
a controller (802, 1002);
an optical touchpad with a touchable surface (100), the optical touchpad (100) communicatively coupled to the controller (802, 1002) to detect a movement traversing at least one direction substantially within a given plane; and
a sensor (500) communicatively coupled to the controller (802, 1002) to detect a pressure in a direction substantially normal to the given plane, and the controller (802, 1002) configured to substantially concurrently detect both the movement and the pressure.

2. A device for processing a gesture from a computing device user, **characterized by**:
a housing to hold a controller (802, 1002), a display responsive to instructions from the controller, an optical touchpad (100) and a sensor (500);
the optical touchpad with a touchable surface, the optical touchpad communicatively coupled to the controller to detect a movement traversing at least one direction substantially within a given plane; and
the sensor communicatively coupled to the controller to detect a pressure in a direction substantially normal to the plane, and the controller configured to change an object being rendered on the display in response to a substantially concurrent detection of the movement and the pressure.

3. A method of processing a gesture from a computing device user, **characterised by**:
communicatively coupling a controller (802, 1002) with an optical touchpad (100) and a sensor (500);
detecting an increase in pressure upon a surface of the optical touchpad (100); and
detecting a movement along the surface, the movement occurring substantially concurrently with the pressure and beginning within a predetermined time period after the pressure is sensed as a combined pressure and movement.

4. The device of claim 1 or 2, wherein the concurrent detected movement and pressure are processed as a combined movement only when the movement is detected within a predetermined time after the pressure is detected.

5. The device of claim 1 or 2, wherein the optical touchpad (100) includes a light emitter (110) operative to emit light in a direction towards the touchpad (100), and an optical sensor (112) operative to sense changes in light reflected from the touchpad (100).

6. The device of claim 5, wherein the light emitter (110) is an LED.

7. The device of claim 1 or 2, wherein the optical touchpad includes one or more lenses (106, 108).

8. The device of claim 7, wherein at least one of the one or more lenses (106, 108) remains at a fixed distance from the surface (100) when the pressure is applied to the surface (100).

9. The device of claim 7, wherein at least one of the one or more lenses (106, 108) moves to a changed distance from the surface (100) when the pressure is applied to the surface (100).

10. The device or method of any of claims 1-3, wherein the controller (802, 1002), the optical touchpad and the sensor (500) are packaged together within one physical unit (10).

11. The device or method of any of claims 1-3, wherein the optical touchpad is in a physically separate housing (114) than the controller (802, 1002).

12. The device or method of any of claims 1-3, wherein the detecting movement includes detecting with a light emitter (110) operative to emit light in a direction towards the touchpad (100), and an optical sensor (112) operative to sense changes in light reflected from the touchpad (100).

13. The device or method of any of claims 1-3, wherein the device (10) is at least one of a cell phone (200), radio phone (200), wireless phone (200), wired phone, music player (200), game device (200), handheld computer (200), ebook reader (200), portable computer (200), laptop computer (200), desktop computer (200), computer server (200), computer peripheral (200), printer, monitor (200), keyboard (200), plug-in keyboard complement device (200), input device (200), output device (200), embedded devices (200), set top device (200), industrial controller (200), scientific apparatus (200), appliance (200), kitchen appliance (200), vehicle interface (200), interface for controlling movement of a vehicle (200), interface for control of a vehicle accessory (200), interface for a navigation device (200), interface for a media device (200), interface for a vehicle audio or video device (200), interface for control in a wheeled transportation vehicle (200), interface for control in a wheelchair (200), interface for control in a boat (200), interface for control in a flying vehicle (200), interface for control in a military vehicle (200), interface for control in a lever (200), interface for control in a portal (200), interface for control in a door (200), interface for control in an access panel (200), and interface for control in an architectural structure (200).

## Amended claims

### Amended claims in accordance with Rule 137(2) EPC.

**1.** An input device **characterized by**:
a controller (802, 1002);
an optical touchpad with a touchable surface (100), the optical touchpad (100) communicatively coupled to the controller (802, 1002) to detect a movement traversing at least one direction substantially within a given plane; and
a sensor (500) communicatively coupled to the controller (802, 1002) to detect a pressure in a direction substantially normal to the given plane, and the controller (802, 1002) configured to substantially concurrently detect both the movement and the pressure.

**2.** A device for processing a gesture from a computing device user, **characterized by**:
a housing to hold an input device as claimed in claim 1 and a display responsive to instructions from the controller.

**3.** A method of processing a gesture from a computing device user, **characterised by**:
communicatively coupling a controller (802, 1002) with an optical touchpad (100) and a sensor (500);
detecting an increase in pressure upon a surface of the optical touchpad (100);
and
detecting a movement along the surface, the movement occurring substantially concurrently with the pressure and beginning within a predetermined time period after the pressure is sensed as a combined pressure and movement.

**4.** The device of claim 1 or 2, wherein the concurrent detected movement and pressure are processed as a combined movement only when the movement is detected within a predetermined time after the pressure is detected.

**5.** The device of claim 1 or 2, wherein the optical touchpad (100) includes a light emitter (110) operative to emit light in a direction towards the touchpad (100), and an optical sensor (112) operative to sense changes in light reflected from the touchpad (100).

**6.** The device of claim 5, wherein the light emitter (110) is an LED.

**7.** The device of claim 1 or 2, wherein the optical touchpad includes one or more lenses (106, 108).

**8.** The device of claim 7, wherein at least one of the one or more lenses (106, 108) remains at a fixed distance from the surface (100) when the pressure is applied to the surface (100).

**9.** The device of claim 7, wherein at least one of the one or more lenses (106, 108) moves to a changed distance from the surface (100) when the pressure is applied to the surface (100).

**10.** The device or method of any of claims 1-3, wherein the controller (802, 1002), the optical touchpad and the sensor (500) are packaged together within one physical unit (10).

**11.** The device or method of any of claims 1-3, wherein the optical touchpad is in a physically separate housing (114) than the controller (802, 1002).

**12.** The device or method of any of claims 1-3, wherein the detecting movement includes detecting with a light emitter (110) operative to emit light in a direction towards the touchpad (100), and an optical sensor (112) operative to sense changes in light reflected from the touchpad (100).

**13.** The device or method of any of claims 1-3, wherein the device (10) is at least one of a cell phone (200), radio phone (200), wireless phone (200), wired phone, music player (200), game device (200), handheld computer (200), ebook reader (200), portable computer (200), laptop computer (200), desktop computer (200), computer server (200), computer peripheral (200), printer, monitor (200), keyboard (200), plug-in keyboard complement device (200), input device (200), output device (200), embedded devices (200), set top device (200), industrial controller (200), scientific apparatus (200), appliance (200), kitchen appliance (200), vehicle interface (200), interface for controlling movement of a vehicle (200), interface for control of a vehicle accessory (200), interface for a navigation device (200), interface for a media device (200), interface for a vehicle audio or video device (200), interface for control in a wheeled transportation vehicle (200), interface for control in a wheelchair (200), interface for control in a boat (200), interface for control in a flying vehicle (200), interface for control in a military vehicle (200), interface for control in a lever (200), interface for control in a portal (200), interface for control in a door (200), interface for control in an access panel (200), and interface for control in an architectural structure (200).
